# EUROPEAN PATENT APPLICATION

(11) **EP 3 514 707 A1**
(43) Date of publication of application: **24.07.2019**
(21) Application number: 18152128.7
(22) Date of filing: 17.01.2018
(51) Int. Cl.: G06F 17/50

(54) **DESIGNING ASSEMBLIES OF DIGITAL MODELS UTILIZING INFORMATION DERIVED FROM EARLIER DESIGN PROCESSES**

(71) Applicant: PDM Software ApS, 9220 Aalborg Ost (DK)
(72) Inventor: Larsen, Jørgen Støttrup Schiønning, 9220 Aalborg Ø (DK)
(74) Representative: Zacco Denmark A/S

(57) **Abstract**

Disclosed is methods, systems, and computer program products for use in generating a data storage storing information expressing which components have been arranged in direct contact in assembled products, and methods, systems, and computer program products configured to utilize such a data storage. The method for generating the data storage comprising. The method comprising:
- obtaining a digital assembly comprising a first digital 3D model and a second digital 3D model arranged according to a first relative arrangement;
- determining if the first and second digital 3D models are in direct contact in the first relative arrangement; and
- in accordance with a determination that the first and second digital 3D models are in direct contact, storing information in a data storage where the stored information is expressing that the first and second digital 3D models are in direct contact in the obtained digital assembly.

Such a data storage can be used when designing a other assemblies by using the information in the data storage to identify the most likely candidates for the next component in the design process.

## Description

### Technical field

This disclosure generally relates to computer assisted designing of products. More particularly, the disclosure relates to computer assisted designing where a data storage containing information relating to previous use of different components is generated and applied to provide more efficient methods and tools for digital design of products.

### Background

Computer Aided Design (CAD) software or other similar digital tools can be used to design a product from a number of components. Digital models of the components are arranged according to the relative arrangement which provides that the components interact according to the desired effect of the components in the designed physical product. The digital models of different components can e.g. be found in libraries containing digital models of a large number of components. When a number of digital models are joined in a assembly, the operator often selects the digital model for the next component from extensive list of components based on his experience.

Given that many components exist there is a need for digital tools providing assistance to an operator in selecting the digital model representing the next component for the design of the product.

### Summary

In many systems, such as in mechanical and electrical systems, components which are in physical contact interact in some way. In particular are two components arranged in direct contact most often interacting in a manner according to the common purpose of the two components in the product.

Disclosed is a method for use in generating a data storage storing information expressing relationships between components assembled to form products, the method comprising:
- obtaining a digital assembly comprising a first digital model and a second digital model arranged according to a first relative arrangement;
- determining if the first and second digital models are connected in the first relative arrangement; and
- in accordance with a determination that the first and second digital models are connected, storing information in a data storage where the stored information comprises data expressing that the first and second digital models are connected in the obtained digital assembly.

By analysing an assembly of digital models representing the physical components of a product it is possible to determine which of the digital models are connected. The corresponding physical components are expected to interact with a common purpose in the product. Analysis of the digital assembly can thus provide valuable information with regards to which physical components has been selected and arranged to interact in the product. This information can be collected for several assemblies and be compiled to provide guidance for subsequent operators of e.g. a CAD software package with respect to which components most often has been used together with a given component. The same information can be obtained by while the operator designs the assembly using e.g. CAD software to design the product.

The stored information may express that the first and second digital models are connected simply by the presence of a data entry for the two digital models in the data storage data, or such an entry may comprise data indicating that the two models has been found to be connected in an assembly.

In the current disclosure, the phrase "relationship" may be used to express how frequently digital models and/or corresponding physical components are connected, such as arranged in direct contact, in analysed assemblies. A strong relationship may be assigned to a first and second component if these components frequently are connected, e.g. arranged in direct contact, in assembled products. This may e.g. be determined by detecting that the corresponding digital models frequently are arranged with a distance within a threshold distance. A first component may be said to have a stronger relationship with a second component than a third component when the first component more frequently is connected with the second component than the third component.

In current disclosure, the phrase "a strong relationship" may be used to describe e.g. when one component is among the 20, 15, 10, 8, 6, 5, 4, or 3 components most frequently connected to another component. E.g. a first and a second component may have a strong relationship when the second component is among at least the 5 components most frequently connected to the first component, or vice versa, in the analyzed assemblies.

In some embodiments, the first digital model relates to a first component, and a relationship between the first component and other components is determined by a statistical analysis of information stored for a plurality of digital assemblies, where the relationship express how frequent the first component and other components are connected in digital assemblies.

The relationship between the components can be expressed through the number of entries for the components and/or the content of the entries. The information stored may be in the form of an entry in the data storage comprising data relating to the identity of the digital models as well as data expressing that and/or how the digital models are connected in the digital assembly.

In the current disclosure, two physical components may be said to be connected when they are in direct physical contact, i.e. touching each other. Accordingly, in some embodiments determining if the first and second digital models are connected in the first relative arrangement comprises determining whether the first and second digital models are in direct contact with each other. I.e. the digital models may be said to be connected when at least portions of adjacent surfaces of the digital models are in direct contact, i.e the adjacent surfaces are touching, aligned, coinciding, overlapping or at least within a threshold distance of each other. In contrast, the prior art, e.g. US20130080121A1 only teaches applying constraints.

The current disclosure differs from the prior art in that, it is determined whether the first and second objects are connected in the analysed assemblies, e.g. by determining that the objects are in direct contact. This can be done by determining the shortest distance between the first and second objects and using this distance to identify when the two components are connected and thus presumably interact in the designed product. This provides the advantage that the analysis can be made highly automatic and can be applied e.g. while a user assembles a new product without the operator having to perform any additional steps. A computer program product configured to implement the disclosed method may comprise instructions for analyzing each digital assembly designed such that when an operator uses the computer program product in a design process, the analysis is performed automatically, e.g. when the operator indicates that the digital assembly is complete.

The analysis can also be performed on previous constructed assemblies, e.g. by running a batch job on a large number of previously designed assemblies thereby forming a data storage with a significant statistic for many different designs. I.e. in some embodiments, the method comprises obtaining a plurality of digital assemblies comprising digital models for a plurality of components. In some embodiments, the method then further comprises determining which of the plurality of digital models in each of the digital assemblies are connected, e.g. in direct contact, and the stored information is expressing which digital models are connected in the obtained digital assemblies. This provides the advantage that the storage hold information from several designed products and hence can provide a statistically stronger measure of which components may be intended to be selected during a design process.
Statistical data about the relationships for the plurality of components may also be derived based on the stored information and used to determine the most likely next component in a design process. This may both be based on the direct contact between components but also on contacts between other components in the assembly.

The disclosed method is not dependent on a specific CAD system and one vendors CAD file format but can be applied to many 3D CAD systems. A data storage generated using one CAD system may thus also be imported and used in another vendors CAD system.

Disclosed is a method for use in generating a data storage storing information expressing which components have been arranged in direct contact in assembled products, the method comprising:
- obtaining a digital assembly comprising a first digital model and a second digital model arranged according to a first relative arrangement;
- determining if the first and second digital models are in direct contact in the first relative arrangement; and
- in accordance with a determination that the first and second digital models are in direct contact, storing information in a data storage where the stored information is expressing that the first and second digital models are in direct contact in the obtained digital assembly

The data storage may e.g. be a data file, a data record, a database or any other data structure configured to store data and informations. In some embodiments, the data storage comprises entries for each first and second digital model which are determined to be connected in a digital assembly, such as entries with data relating to the identity of the first and second components, connecting surfaces of the two components and the distance between the surfaces, an assembly identifier, data expressing the context of the assembly, etc.

Storing information for a number of designs provide that the generated data storage will contain information expressing how often different components have been used together in previous assemblies. I.e. for a given component, the data storage information can express relationships between this component and others, as well as how often different components have been used together with this particular component.

Having access to a data storage with a collection of information expressing relationships between components provide the advantage when designing new assemblies of digital models in that the design processes can be made much more efficient e.g. by the computer program product providing a set of potential most likely next component.

The relationships expressing which digital model or models of components most frequently have been used together can be used to provide suggestions for the next component in the design process. Accordingly, disclosed is also a method for generating a set of candidate components for a next component when creating an assembly of digital models, wherein the method comprises:
- obtaining a first digital model of a first component;
- obtaining information expressing relationship between the first component and a plurality of other components; and
- generating a set of candidate components for a next component which is intended to be connected with the first component by selecting a number of candidate components based on the information expressing the relationship.

The relationships may e.g. relate to design constraints or the distance between the digital models in previously designed digital assemblies, such as when the digital models are connected and/or arranged in direct contact in these assemblies.

Disclosed is also a method for generating a set of candidate components for a next component when creating an assembly of digital models, wherein the method comprises:
- obtaining a first digital model of a first component;
- obtaining information expressing which components the first component has been arranged in direct contact with in a plurality of designed digital assemblies; and
- generating, based on the information, a set of candidate components for a next component which is intended to be arranged in direct contact with the first component in the created assembly.

The first digital model may be obtained as part of an incomplete assembly displayed in a user interface.The set of candidate components for a next component database can provide a list of potential components which can be displayed in a user interface along with the first digital model.

In some embodiments, the method comprises displaying digital representations of the candidate components in the set of candidate components in a user interface.

The information may be obtained from a data storage generated using the a method according to one of the disclosed embodiment.

Generating and displaying a set of candidate components for the next component in the assembly provides the advantage that the operator is guided to select the most probably next component thus saving substantial amount of time compared to the prior art where the operator must distinguish the relevant component among many irrelevant components. Further, the unexperienced operator can also benefit from the knowledge of more experienced operators. Information stored in the data storage representing former selection of components used with a component can guide the operator with respect to which components can be used with the component. This provides for a faster design procedure with fewer errors thus saving the operator much time in designing the assembly and the corresponding product, and may also provide a better product based on other users selections and experience.

The data storage can be continuously updated and improved e.g. by adding the operator's selection from the presented list of candidate components and by detecting connected digital models in the assembly being designed. Thereby, the generated data storage will grow over time and continuously provide better statistics for the selections of previous operators of a system implementing the disclosed method or computer program product, such as a CAD system. The selections made by more experienced operators can then automatically be passed on to less experienced operators using e.g. a set of candidate components generated based on the information stored in the data storage. The data storage thus stores information describing how a product of a certain kind, and potentially for a certain context, can be designed.

The analysis of the previous selections made by previous operators may also include collecting information expressing how frequently a user rejects a proposed list of candidate components.

In some embodiments, deriving relationships between components comprises calculating frequencies expressing how often various digital models are connected in the obtained plurality of digital assemblies.

In the current disclosure, the phrase "frequency" is used to indicate how often one component is used and/or selected in relation to another component. For example, the frequency can indicate how frequently a 3D digital representation of a second component is connected to and/or selected for a 3D digital representation of a first component.

The information, expressing relationships between the first component and a plurality of other components, can be stored in a data storage on a non-transitory computer readable medium, such that obtaining the information comprises loading the information from the data storage into a hardware processor.

In general, the step of obtanning digital assemblies or information may comprise loading the digital assemblies or the information into a hardware processor. Different operations can then be performed on the obtained digital assemblies and information, such as determining whether two digital models are in direct contact or deriving statistical information about relationships.

Obtaining a digital model of a component may comprise displaying, in a user interface, an incomplete digital assembly comprising the digital model and interacting with the user interface to select the digital model.

In some embodiments, the digital models are digital 3D models, such as solid 3D models or shell 3D models, e.g. polygon mesh models, boundary representation models, etc. The digital 3D models may express the geometry of a corresponding component. The component may be an actual physical component with the digital 3D model being a digital 3D representation of the component, such as a Computer Aided Design (CAD) model of the component. I.e. the first and second digital 3D models may relate to first and second physical components, respectively. The obtained digital assembly then describes how the first and second physical components are intended to be arranged relative to each other in the assembled physical product. I.e. in some embodiments, the first and second digital 3D models are digital 3D representations of physical components, such as a first CAD model of a first component and a second CAD model of a second component.
The digital 3D model may also be used e.g. in a design process where a physical component at a later point in time will be manufactured based on the digital 3D model. This can e.g. be by the use of direct digital manufacture equipment, such as computer controlled machines or 3D printers.

In current disclosure, the phrase "a digital assembly" is used to describe an assembly of two or more digital models arranged according a structured arrangement of a desired design.
The digital models may correspond to physical components which when arranged according to the structured arrangement of the digital models in the assembly forms a physical product. The digital assembly of digital models may be obtained in various ways, such as when an operator in a user interface creates a digital assembly for a product by manually selecting digital models of various components and arranging these digital models according to a desired arrangement. The digital assembly may also be a previously designed digital assembly and obtaining the digital assembly may comprise loading the previously designed digital assembly into the memory of a hardware processor for analysis of which surfaces of which components are connected, e.g. by determining which digital models in the assemblies have surfaces that are in direct contact with each other.

The hardware processor may thus be configured to compile information derived for a plurality of digital assemblies to determine the relationships between the components. The information may be compiled on a regular basis, such as when new data are added, after predetermined time intervals, or at a predetermined time of the day, week, or month.

An analysis determining the relationships, e.g. a statistical analysis determining the frequencies for a first digital model being connected to other digital models, can be performed when the data storage is generated, such that data expressing the relationships can be stored in the data storage, or it can be performed when data are read from the data storage, e.g. when generating a list of candidates for the next component. I.e in some embodiments, the method comprises performing a statistical analysis on the obtained information to determine the relationships and/or which digital models of components the first digital model most frequently has been connected with, such as in direct contact with, in the plurality of designed digital assemblies. The more digital assemblies information is obtained from and analysed, the stronger statistical evidence about the relationship between components can be provided.

The relationships between components can be determined by compiling the information derived during analysis and/or information stored in the data storage. The determined relationships may then also be stored in the data storage such that the relationships are readily available when the digital model of a given first component is selected in a design process.

The relationships may also be determined from the stored information while designing a new assembly. I.e. for a digital model selected in an incomplete assembly of a current design process, the corresponding component's relationships with other components may be determined during the design process, e.g. when the digital model is selected. This approach has the advantage that the size of the data storage is smaller when it does not include relationships for a vast number of components.

In the current disclosure, the phrase "incomplete assembly" may also cover a single individual digital model or component.
The first digital model may be alone or part of an incomplete digital assembly of components. Accordingly, in some embodiments obtaining the first digital model of the first component comprises displaying, in a user interface, an incomplete digital assembly comprising a digital representation of the first component and interacting with the user interface to select the digital representation of the first component.

In the current disclosure, the phrase "candidate components" is used to describe one or more components identified as likely candidates for the next components in the assembling of a product.

In current disclosure, the phrase "a physical assembly" is used to describe an assembly of two physical or more physical components arranged according to a structured arrangement in a physical product.

In some embodiments, determining if the first and second digital models are in direct contact comprises determining a shortest distance between the first and second digital models in the first arrangement.
Some digital models, e.g. some digital 3D models representing physical components, only provide inaccurate representations of the components and the relative arrangement of these digital models in a digital assembly may also be somewhat inaccurate, e.g. due to limited resolution in the digital representation provided by a CAD software product. Accordingly, the digital models may have a minute distance in the digital assembly although the corresponding physical components would be touching and presumably interacting in some manner in an assembled physical product. Accordingly, in some embodiments, the method comprises comparing the shortest distance with a threshold distance.
With an appropriate value for the threshold distance, e.g. 1/1000 of the size of the smallest component/digital model, having the first and second digital models arranged with a shortest distance within the threshold distance indicates that the first and second components are in contact, and can thus be used to determine whether the first and second components most likely interact in the assembled product.
The shortest distance between the first and second digital models may be determined as the shortest distance between adjacent surfaces, edges, and corners of the digital models.
The threshold distance can in principle be zero but may also be a finite number such that components interacting in an assembly are not mistakenly considered to be separated by a minute distance, as thus not interacting, because of slightly imprecise digital representations of the components.

The frequency by which a first and a second component are used together may depend on the context of the product.
The context describes what kind of product or technical field the digital assembly relates to, such as which physical product is designed. E.g. a product designed for use in a humid, highpressure environment may require different components compared to a product intended for use at ambient conditions. Constructing a space rocket may require different components than those adequate for a designing an oven. The context can be expressed via a description, a graph or a list of components used in a product/assembly to obtain a specific purpose.
In some embodiments, the stored information comprises data expressing the context of the digital assembly.
An advantage of this embodiment is that knowledge of the context of the digital assembly can be applied when the information in data storage subsequently is used to create a new assembly.
In some embodiments, the context of the design process is taken into account when generating the set of candidate components. This may be done by reading context specific data from the data storage or selecting a context specific data storage. The context specific data or data storage can be generated and stored in connection with the previous design processes which provided the information and data for the data storage.

In some embodiments, the stored information comprises data expressing the first relative arrangement.
An advantage of this embodiment is that when such data are stored along with the information expressing the relationship between components, the relative arrangement used in the previous assembly is also known and may be applied in designing a new digital assembly. This data may be utilized to automatically arrange the first and second digital models relative to each other according to the first relative arrangement. If an operator agrees with the proposed arrangement of the two digital models he can immediately proceed to the next step.
Not only will the operator have saved time in selecting the second component he will in this case also have saved time placing the second digital model in the assembly. This provides for a very fast design procedure saving the operator much time in each step in the process.

The relative arrangement of the first and second digital models may be expressed in terms of the relative position and orientation of the digital models.

In some embodiments, the method comprises detecting the contacting surfaces of the first and second digital models, and where the stored information comprises data identifying the contacting surfaces.
The contacting surfaces are e.g. the surfaces of digital 3D models which are in direct contact when the digital 3D models are arranged in the first relative arrangement. E.g a surface or surfaces of the first digital 3D model which are within the threshold distance from a surface of the second digital 3D model and vice versa. In the final product, the contacting surfaces are those surfaces of the first and second component which engages one another when the first and second components are arranged according to the first relative arrangement.

An advantage of this embodiment is that when the contacting surface are identified this information can be used when constructing new assemblies, where the information giving some indication on how the first and second components have been arranged in previous designs.

In some embodiments, the contacting surfaces are identified as the surfaces of the first and second digital models having a distance within the threshold distance.

In some embodiments, the stored information comprises the determined shortest distance between the first and second digital models.
This embodiment provides an advantage in cases where information is stored in the database in different situations such that the data storage not only contains entries for components that are arranged e.g. in direct contact in previously designed assemblies. Analytical tools can then based on the distance information determine which entries are relevant e.g. for determining which digital models most often are used together with a selected first digital model.

In some embodiments, the stored information comprises data identifying the first and second digital models.
This provides the advantage that analytical tools applied to a data storage containing the information can determine which entries are relevant e.g. for determining which digital models most often are used together with a selected first digital model.

In the current disclosure, two physical components may be said to be connected when their center axes are aligned. I.e. in some embodiments, determining if the first and second digital models are connected comprises detecting that a first center axis of a first digital model and a second center axis of a second digital 3D model are overlapping and aligned in the first relative arrangement.
When the center axes of two components are aligned and overlapping, e.g. one center axis overlapping the other, the two components often interacts in the assembly. Information expressing that the center axes of two components often are aligned and overlapping in assembled products can be applied to provide initial guesses for a next component in a design process. For an enlongated component, such as a cylinder or rod, the center axis may follow a line extending between the centers of the bases of the component. The stored information may comprise data identifying the first and second center axis. Such information can also be utilized for initial guesses for a relative arrangement in future design processes.

In some embodiments, the statistical analysis comprises applying machine learning algorithms on the stored information. In some embodiments, deriving the relationships comprises applying machine learning algorithms on the stored information.

It is advantageous to use machine learning algorithms, such as neural networks and other stastistical methods in the statistical analysis and/or to determine relationships since such algorithms can be applied to classify the best choice or choices of next component in a design process, based on number of occurrences and in which relation with other parts in a similar product the first and second component has been used.
Applying machine learning algorithms may also allows the data storage to be continuously updated when more and more digital assemblies are analysed.

In some embodiments, machine learning algorithms are applied when generating the set of candidate components.

The processing of the stored information may comprise cluster analysis and/or machine learning. An algorithm for determining the relationship between various components may be learned through iterative evaluation of the designed assemblies and the contacts of the components therein. The analysis can identify patterns in the component selection showing e.g. preferred selections based on the context of the assembly and which components have strong relationships with other components or groups of components.

Over time the algorithm will be capable of recognising patterns in operator selections and to e.g. identify a set of candidate components. Through machine learning the relationships may continuously be evaluated, e.g. be comparing operator selections with generated sets of candidate components, to improve the precision of the relationships between a component and other components or groups of components.

The machine learning algorithms may be configured to identify relationships between components by analyzing a plurality of obtained digital assemblies and be used to predict the most probably next component in a design process.

An incomplete assembly may comprise both a first digital model and one or more further digital models. It may be advantageous to also take the one or more further digital models into account when generating the set of candidate components. Accordingly, in some embodiments the obtained information also expresses relationships for the one or more further digital models and the generated list also takes the one or more further digital models into account when generating the set of candidate components. Disclosed is thus a method for generating a set of candidate components for a next component when creating an assembly of digital models, wherein the method comprises:
- obtaining digital models of at least two components;
- obtaining a data storage storing information expressing relationships between components;
- generating, based on the information in said data storage, sets of candidate components for a next component, one set of candidate components for each of the obtained digital models;
- generating a combined set of candidate components from the at least two sets of candidate components.

Relationships between each of the at least two components and other components may be determined by analyzing the information in the data storage, and a set of candidate components for each of the at least two components can be generated from the corresponding component's relationships.
In some embodiments, the combined set of candidate components for a next component is generated based on the components which have the strongest combined relationship with the at least two components. The digital models of the at least two components may be obtained as part of incomplete assembly where the digital models are arranged according to their planned relative arrangement.

Genarating a combined set of candidate components provides the advantage that the components proposed to the operator more precisely may represent the correct choice than when only taking one components relationships into account.

In some embodiments, generating the combined set of candidate components comprises determining the intersection of the at least two sets of candidate components.

The position and function of a component in an assembly may influence which other components it is connected to. Accordingly, for a given selected digital model the most likely candidate for the next digital model can also depend on which other digital models the selected digital model already is connected to. In some embodiments, the stored information thus comprises data expressing which digital models the first digital model is connected to in addition to the second digital model.

Within the field of electronic and electrical products two components may be connected by an electronic conducting element, such as a conducting wire. In an obtained digital assembly, the presence of an element representing a physical connection indicates that the components interact and the corresponding digital models may thus be identified as being connected.

In some embodiments, the information expressing relationships between the first component and a plurality of other components comprises the frequency at which each of the other components previously has been connected with the first component.

The information on the data storage thus provides a statistical measure of which components most frequently have been connected with the first component. For a first digital model in an incomplete digital assembly, the information stored in the data storage can thus be used to provide a guess for the next component which should be selected to be connected with the first component.

Disclosed is a method for use in generating a data storage storing information expressing relationships between components assembled to form products, the method comprising:
- obtaining a digital assembly comprising a first digital model and a second digital model arranged according to a first relative arrangement;
- determining a shortest distance between the first and second digital models in the first relative arrangement; and
- in accordance with a determination that the shortest distance is within a threshold distance, identifying the first and second digital models as being connected and storing information in a data storage, where the stored information comprises data identifying the first and second digital models and data expressing that the first and second digital 3D models are connected in the obtained digital assembly.

A data storage comprising information expressing relationships between components based on the selections and arrangements of previously designed assemblies can be utilized to improve a number of design processes.

Disclosed is a method for creating an assembly of digital models each relating to a physical component of a product, wherein the method comprises:
- displaying an incomplete assembly of digital models in a user interface;
- choosing a first digital model in said incomplete assembly, the first digital model corresponding to a first component;
- obtaining a data storage expressing relationships between the first components and other components, where the relationships preferably express how often each of the other components has been connected with the first component in previously created digital assemblies;
- reading from said data storage a number of candidate components, the candidate components being those with the strongest relationships with the first component; and
- presenting visual representations of the candidate components in the user interface.

One of the candidate components is then selected and the corresponding digital model is arranged at the first digital model in the incomplete assembly. In some embodiments, the digital model of the selected candidate component is automatically arranged according to a first relative arrangement read from the data storage, the first relative arrangement corresponding to a previously used arrangement of the first component and the selected next component.

Disclosed is a method for creating an assembly of digital models, wherein the method comprises:
- obtaining a list of components for use in generating an assembly;
- obtaining digital models corresponding to the components on the list,
- obtaining a data storage comprising information expressing relationships between the components, the relationships expressing how frequently the components has been arranged to connect in previous design processes, the data storage further comprises data expressing the relative arrangements of the components in the previous design processes; and
- automatically selecting digital models of the components and arranging the selected digital models in a relative arrangement based on the information read from the data storage.

In some embodiments, automatically arranging the digital models of the components comprises using machine learning to determine in which sequence the components need to be arranged. Certain components may have more than one position and to determine which positions is the best may needs information about where other components are placed and used in the design.

Disclosed is a method for determining relationships between components by analysing assemblies of digital models of the components, the method comprising:
- obtaining a number of digital assemblies each comprising digital models for a plurality of components;
- analyzing the obtained digital assemblies to determine which digital models are connected in each of the digital assemblies, such as in direct contact in the digital assemblies; and
- deriving relationships between the components based on the analysis, the relationships expressing for which components the corresponding digital models most frequently are connected in the analysed digital assemblies.

In some embodiments, deriving the relationships comprises performing a statistical analysis on a result of the obtained information to determine which digital models of components the first digital model most frequently has been in direct contact with in the digital assemblies

In some embodiments, determining which digital models are connected comprises determining which digital models are in direct contact in the digital assembly.

Disclosed is a method for determining relationships between components from a plurality of assemblies, the method comprising:
- obtaining a plurality of digital assemblies, where each digital assembly comprises digital models for a number of components;
- analysing each digital assembly to determine which digital models in the digital assembly are connected to each other; and
- calculating, based on the analysis, frequencies expressing how often various digital models are connected to each other in the plurality of digital assemblies.

Disclosed is a method for determining relationships between a first component and other components from a plurality of assemblies, the method comprising:
- obtaining a plurality of digital assemblies, where each digital assembly comprises digital models for a number of components and at least part of the digital assemblies comprising a digital model of the first component;
- analysing each digital assembly to determine which other digital models in the digital assembly the digital model of the first component is connected to; and
- calculating, based on the analysis of the digital assemblies, frequencies expressing how often the digital model of the first component is connected to the digital models of the other components in the plurality of digital assemblies.

The steps of the disclosed embodiments may be implemented using a computer program product stored on a non-transitory computer readable medium; the computer program product comprising instructions which when executed using a hardware processor performs the disclosed method steps and/or assists an operator in performing these steps.

In particular is disclosed a computer program product stored on a non-transitory computer readable medium, where the computer program product providing, when executed by a hardware processor, a digital tool for use in generating a data storage storing information expressing relationships between components assembled to form products, the computer program product comprising instructions for:
- obtaining a digital assembly comprising a first digital model and a second digital model arranged according to a first relative arrangement;
- determining if the first and second digital models are connected in the first relative arrangement; and
- in accordance with a determination that the first and second digital models are connected, storing information in a data storage where the stored information comprises data expressing that the first and second digital models are connected in the obtained digital assembly.

In particular is disclosed a computer program product stored on a non-transitory computer readable medium, where the computer program product providing, when executed by a hardware processor, a digital tool for generating a set of candidate components for a next component when creating an assembly of digital models, the computer program product comprising instructions for:
- obtaining a first digital model of a first component;
- obtaining information expressing relationship between the first component and a plurality of other components;
- generating a set of candidate components for a next component which is intended to be connected with the first component by selecting a number of candidate components based on the information expressing the relationship; and
- displaying digital representations of the candidate components in the set of candidate components in a user interface.

The steps of the disclosed embodiments may be implemented using a system with a hardware processor and a non-transitory computer readable medium encoded with a computer program product comprising instructions which when executed by the hardware processor performs the disclosed method steps and/or assists an operator in performing these steps.

In particular is disclosed a system for use in generating a data storage storing information expressing which components have been arranged in direct contact in assembled products, the system comprising:
- a hardware processor;
- a non-transitory computer readable medium encoded with a computer program product configured to provide a digital tool for generating the data storage, where the computer program comprises instructions for:
- obtaining a digital assembly comprising a first digital model and a second digital model arranged according to a first relative arrangement;
- determining if the first and second digital models are in direct contact in the first relative arrangement; and
- in accordance with a determination that the first and second digital models are in direct contact, storing information in a data storage where the stored information is expressing that the first and second digital models are in direct contact in the obtained digital assembly.

Also is disclosed a system for use in generating a data storage storing information expressing relationships between components assembled to form products, the system comprising:
- a hardware processor;
- a non-transitory computer readable medium encoded with a computer program product configured to provide a digital tool for generating the data storage, where the computer program comprises instructions for:
   - obtaining a digital assembly comprising a first digital model and a second digital model arranged according to a first relative arrangement;
   - determining if the first and second digital models are connected in the first relative arrangement; and
   - in accordance with a determination that the first and second digital models are connected, storing information in a data storage where the stored information comprises data expressing that the first and second digital models are connected in the obtained digital assembly.

A user interface displayed e.g. on a computer screen can be used in the designing of a digital assembly. The content displayed in the user interface may be defined by a computer program product comprising instructions which when executed by a hardware processor performs one or more steps of the disclosed embodiments and/or assists an operator in performing these steps. In particular is discloses a user interface for use in generating a data storage storing information expressing relationships between components assembled to form products, the user interface being configured to:
- obtain a digital assembly comprising a first digital model and a second digital model arranged according to a first relative arrangement;
- determine if the first and second digital models are connected in the first relative arrangement; and
- in accordance with a determination that the first and second digital models are connected, storing information in a data storage where the stored information comprises data expressing that the first and second digital models are connected in the obtained digital assembly.

A computer program product, a system or user interface may be configured to utilize a data storage comprising information expressing relationships between components based on the selections and arrangements of previously designed assemblies to improve a number of design procedures. This may e.g. be when creating an assembly of digital models by performing the steps of the disclosed embodiments for generating a set of candidate components.
The computer program product, system or user interface may be also configured to generate a data storage with information expressing that digital models have been arranged in direct contact in previously designed digital assemblies, or to utilize such a data storage in generating a set of candidate components.

The present disclosure relates to different aspects including the method, system, computer program product and user interface described above and in the following, and corresponding methods, systems, computer program products and user interfaces, each yielding one or more of the benefits and advantages described in connection with the first mentioned aspect, and each having one or more embodiments corresponding to the embodiments described in connection with the first mentioned aspect and/or disclosed in the appended claims.

The features of the method described above and in the following may be implemented in software and carried out on a data processing system or other processing means caused by the execution of computer-executable instructions. The instructions may be program code means loaded in a memory, such as a RAM, from a storage medium or from another computer via a computer network. Alternatively, the described features may be implemented by hardwired circuitry instead of software or in combination with software.

### Brief description of the drawings

The above and/or additional objects, features and advantages of the present disclosure, will be further elucidated by the following illustrative and non-limiting detailed description of embodiments of the present disclosure, with reference to the appended drawings, wherein:
Fig. 1 shows exemplary workflows.
Fig. 2 shows a system.
Fig. 3 shows a user interface.

### Detailed description

In the following description, reference is made to the accompanying figures, which show by way of illustration how the disclosed methods, systems, computer program products and user interfaces may be practiced.

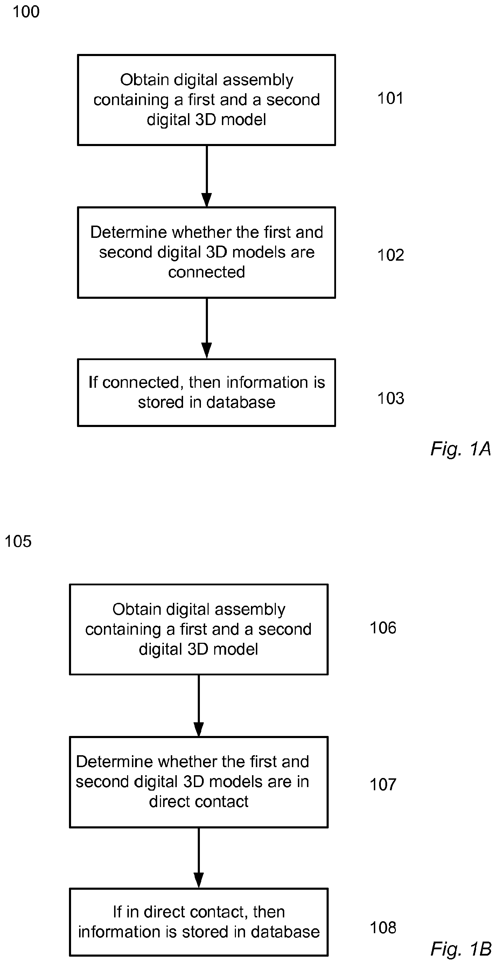

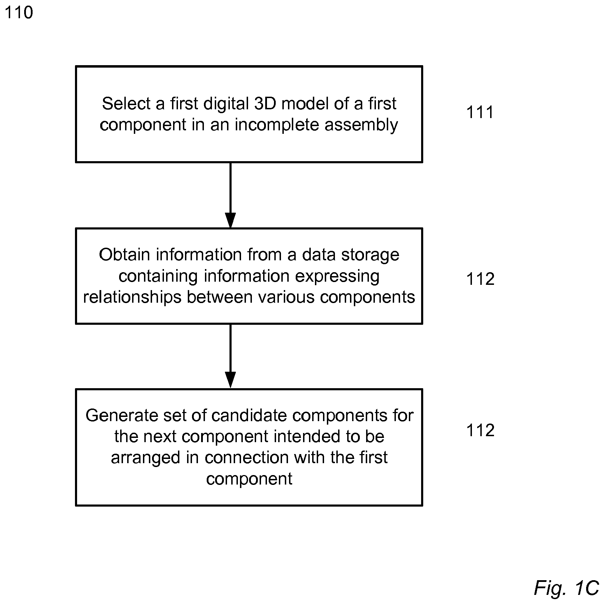

Fig. 1 shows workflows for generating a data storage storing information expressing relationships between components assembled to form a product. A computer system, with a hardware processor executing instructions of a computer program product can perform some of the steps or provide a user interface for an operator to perform the steps.

Fig. 1A shows a workflow **100** where a digital assembly is analysed to identify connected digital models.

In step **101** the digital assembly containing a number of digital 3D models is obtained, either as a digital assembly just designed or a previously designed assembly which is loaded into a hardware processor for analysis. The digital assembly can be designed by a process in which the operator places the digital models in the desired relative arrangements while the digital models and the assembly are displayed e.g. in a user interface on a computer screen. During the design procecsses a second digital model is arranged at a desired position and orientation relative to the already assembled parts of an incomplete digital assembly containing at least a first digital model. Thereby an incomplete or final digital assembly comprising a first digital model and a second digital model arranged according to a first relative arrangement is obtained. The operators continues to arrange further digital models until the assembly is complete. The digital assembly can then be stored and used for assembling the physical product. Also the digital assembly can be analysed to determine which digital models are connected in the assembly.
In step **102** it is determined, by executing approprioate instructions of a computer program product using the hardware processor, whether the first and second digital models are connected in the first relative arrangement.
If connected, information expressing that the first and second digital 3D models are connected in the obtained digital assembly is stored in a data storage in step **103.** Data expressing which of the surfaces of the digital 3D models are connected, the relative arrangement of the digital 3D models and the context of the digital assembly can also be stored in the data storage for use in later design procedures.
The procedure of workflow **100** can be repeated for a large number of designed digital assemblies such that the data storage will have sufficient information to express the relationships between different components and thus assist a later operator when he designs a new product.

Fig. 1B show a workflow **105** for use in generating a data storage storing information expressing which components have been arranged in direct contact in assembled products.
In step **106** a digital assembly comprising a first digital 3D model and a second digital 3D model is obtained, where the digital 3D models are arranged according to a first relative arrangement in the digital assembly.
In step **107** it is determined whether the first and second digital 3D models are in direct contact in the assembly.
This is done by determining the shortest distance between the first and second digital models, and by comparing the shortest distance with a threshold distance. When the first and second digital models are digital 3D models defined by triangle meshes the shortest distance can be determined as the smallest Euclidean distance between the closest triangles of the two digital 3D models. For two triangle mesh digital models relating to first and second components and expressing these components in world coordinates, the procedure can include determining the distance between the different triangles of the two digital models. For a triangle A of first digital model and a trangle B of the second digital model the distance can be determined by:
1. for each vertex of each triangle, project it onto the plane of the other triangle. If the projection lies inside the triangle, compute Euclidean distance of the vertex and its projection,
2. For each edge of triangle A, compute its Euclidean distance from an edge of triangle B.
3. Return the minimum of the distances computed in steps 1 and 2. This will then represent the shortest distance between triangles A and B.
This procedure can be determined for all triangles in the first and second digital models or for selections of these triangles defined e.g. based on which triangles of one digital 3D model is estimated to be close to the other digital 3D model.
The determined shortest distance can then be compared with a threshold distance. If surfaces of two digital 3D models are within this threshold distance, it is concluded that these digital models are in direct contact in the assembly.

The triangle mesh digital models can be generated e.g. by saving/exporting CAD models of components A and B to STL or 3MF file format.

If it is determined that the first and second digital 3D models are connected, information expressing this fact is stored in the data storage in step **108.**

This procedure can be repeated for every digital 3D model in the assembly, such that it is determined which other digital models each digital model of the assembly is connected with. The stored information can contain an entry for each pair of components that are identified as being in direct contact in the digital assembly. Each entry can include data identifying the first and second digital 3D models and the surfaces of the digital 3D model which are in direct contact, together with data expressing the distance between the contacting surfaces, and an assembly identifier.

Repeating this analysis for several digital assemblies will provide a data storage with sufficient information such that the data storage express relationships between the different components and this can assist an operator when he designs a new product.

When information expressing which components have been connected, e.g. arranged in direct contact, in assembled products is made available for a computer program product configured to generate assemblies of digital models, the information can make the design process much more efficient e.g. by the computer program product providing a set of potential most likely next component.
Fig. 1C show a workflow **110** for use in generating a set of candidate components for a next component when creating an assembly of digital 3D models.
In step **111** a first digital 3D model of a first component is obtained as part of an incomplete assembly. The incomplete assembly can be displayed in a user interface where a mouse pointer can be used to select the first digital 3D model among the other digital 3D models already forming part of the assembly.
In step **112** information expressing which components the first component has been connected with, such as arranged in direct contact with, in a plurality of previously designed digital assemblies is obtained. The information express the relationships between the various components avalible for the design of a product. The information can be obtained from a data storage loaded from a computer readable medium into hardware processor.
In step **113** a set of candidate components for a next component which is intended to be arranged in direct contact with the first component in the created assembly is generating based on the obtained information. The set of candidate components show the components which most frequently have been used in connection with the first digital 3D model in previous designs. The set of candidate components can be visualized to the operator by displaying digital representations of the candidate components in the set of candidate components in the user interface.

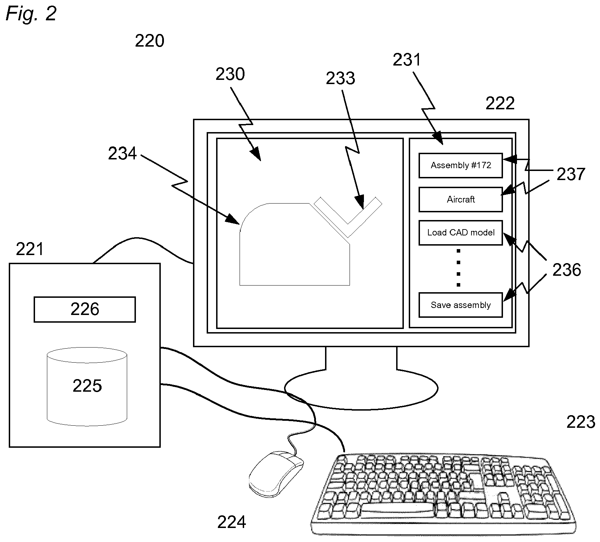

Fig. 2 shows a system configured to generate a data storage with information expressing relationships between different components.
The system **220** has a computer **221** which provides for the execution of steps by which digital assemblies can be analyzed to determine which digital models are connected, either by analyzing existing digital assemblies or the digital assembly that is being designed. The computer **220** may be a general purpose computer capable of running a wide variety of different computer program products or a specialized device limited to particular functions. The computer may include any type, number, form, or configuration of hardware processors, system memory, computer-readable mediums, peripheral devices, and operating systems.
Access devices in the form of a keyboard **223** and mouse **224** are connected to the computer **221** together with a display screen **222** providing a graphical user interface (GUI) allowing an operator to utilize the functionality of the computer and a computer program product stored on the non-transitory computer readable medium **225** of the computer. The computer further has a hardware processor **226** into which digital models of various components and the computer program product can be loaded. The computer **221** is thus capable of executing processes for generating a data storage or utilizing information stored in a data storage in accordance with instructions provided by the computer program product. When the instructions of the computer program product are executed by the hardware processor **226** a user interface **230** is presented on the display screen **222.** In the user interface an operator can arrange different digital models according to a desired arrangement in the digital assembly. Fig. 2 illustrates as an example a digital model **233** of an L-shaped component being arranged at a digital model **234** of a rectangle with a snip corner. The user interface further has a section **231** in which virtual buttons **236** for different options ("Load CAD model" and "Save assembly") are presented along with information **237** for identifying the designed assembly and the context of the digital design.
When the arrangement of the digital models **233, 234** is locked in a desired relative arrangement, instructions of the computer program product for determining a minimum distance between the two digital models can be executed by the hardware processor **226** and the determined minimum distance is compared to a threshold value to determine whether the two digital models **233, 234** are in direct contact in the selected relative arrangement. If this is the case, information is stored in a data storage stored on the non-transitory computer readable medium **225** of the computer **221.** If such analysis is for a plurality of assemblies, the relationships between the used components can be derived as frequency expressing how often different digital models are connected in the plurality of digital assemblies. When the data storage stored on the computer readable medium **225** contains data expressing these relationships it can be used to guide operators in the design of new assemblies.

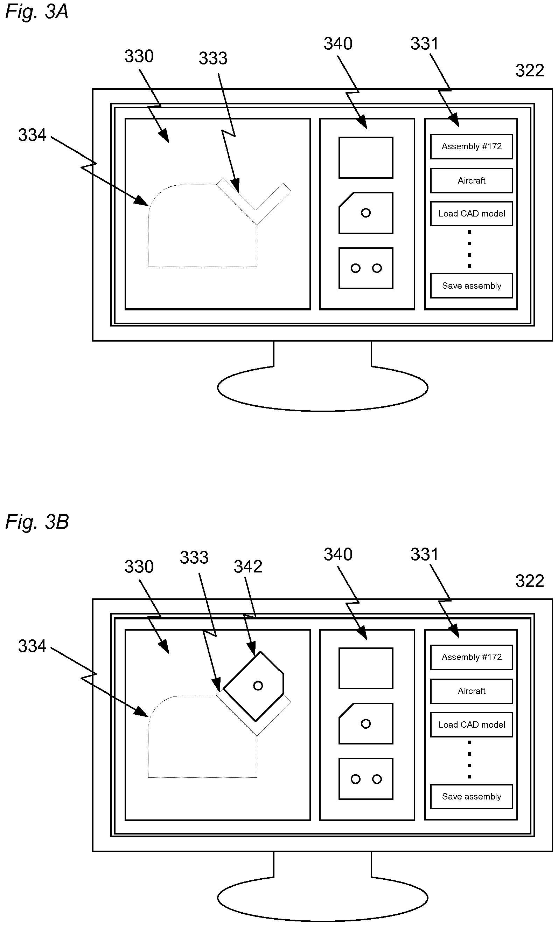

Fig. 3 shows a user interface **320** displayed on a computer screen **322,** where the user interface is configured to provide a set of candidate for a next component based on information stored in a data storage. The user interface and its content can be generated by executing a computer program product using a hardware processor.
In Fig 3A, an incomplete assembly containing connected digital models of an L-shaped component **333** and a rectangle with a snip corner **334** is displayed in the user interface. The digital model of the L-shaped component is marked, e.g. by clicking a mouse button while holding the mouse cursor at the digital model **333.** The entire digital model **333** or a particular surface of this can be marked to indicate that the next components is intended to be arranged in direct contact with this digital model or the particular surface of the digital model.
The computer program product further has instructions for identifying a set **340** of candidate components for the next component based on a data storage storing relationships between various components, such as the data storage generated by the system illustrated in Fig. 2. The generated set contains the three components most frequently connected with the component of the marked digital model **333** in previous designs. In Fig. 3A the generated set contains three candidate components: a rectangle, a rectangle with a snip corner and one through hole, and a rectangle with two through holes. Digital representations of these digital models are displayed in a section **340** of the user interface. The operator is thus guided in his selection of the next component making the design process more efficient and less prone to errors. The desired component can be selected using e.g. a computer mouse.
In the current Example, the operator selects the rectangle with a snip corner and one through hole. When the data storage further stores information expressing relative arrangements of the components, a digital model **342** of this component can automatically be arranged at the digital model **333** of the L-shaped component making the design process even more efficient.

Exemplary methods, systems, non-transitory computer-readable storage media, user interfaces and computer program products are set out in the following items:
1. A method for use in generating a data storage storing information expressing geometric relationships between components assembled to form products, the method comprising:
   - obtaining a digital assembly comprising a first digital model and a second digital model arranged according to a first relative arrangement;
   - determining if the first and second digital models are connected in the first relative arrangement; and
   - in accordance with a determination that the first and second digital models are connected, storing information in a data storage where the stored information comprises data expressing that the first and second digital models are connected in the obtained digital assembly.
2. The method according to item 1, wherein the stored information comprises data expressing the context of the obtained digital assembly.
3. The method according to item 1 or 2, wherein the stored information comprises data expressing the first relative arrangement.
4. The method according to item 1, 2 or 3, wherein determining if the first and second digital models are connected comprises determining a shortest distance between the first and second digital models in the first arrangement, and comparing the shortest distance with a threshold distance.
5. The method according to item 1, 2, 3 or 4, where the method comprises detecting contacting surfaces of the first and second digital models and where the stored information comprises data identifying the contacting surfaces.
6. The method according to item 5 as dependent on item 4, wherein the contacting surfaces are identified as the surfaces of the first and second digital models having a distance within the threshold distance.
7. The method according to any one of items 1-6, wherein determining if the first and second digital models are connected comprises detecting that a first center axis of the first digital model and a second center axis of the second digital model are aligned and overlapping in the first relative arrangement.
8. The method according to any one of items 1-7, wherein the first and second digital models relate to first and second physical components, respectively, such as where the first and second model is a digital 3D representation of a first and second component, respectively.
9. The method according to any one of items 1-8, wherein the method comprises obtaining a plurality of digital assemblies comprising digital models for a number of components and analysing the digital assemblies to derive statistical information about relationships between the components.
10. The method according to item 9, wherein deriving the relationships comprises applying machine learning algorithms on the stored information.
11. The method according to item 9, wherein deriving statistical information about relationships between components comprises calculating frequencies expressing how often various digital models are connected in the obtained plurality of digital assemblies.
12. A method for generating a set of candidate components for a next component when creating an assembly of digital models, wherein the method comprises:
   - obtaining a first digital model of a first component;
   - obtaining information expressing relationships between the first component and a plurality of other components;
   - generating a set of candidate components for a next component which is intended to be connected with the first component by selecting a number of candidate components based on the information expressing the relationships; and
   - displaying digital representations of the candidate components in the set of candidate components in a user interface.
13. The method according to item 12, wherein the relationship between the first component and a second component is determined from the stored information, where the relationship preferably expresses a frequency at which the first and second components previously have been connected.
14. The method according to item 12 or 13, wherein the relationship is stored in a data storage, and the data storage has been generated using the method of any one of items 1 to 11.
15. The method according to item 12, 13, or 14, wherein a context of the design process is taken into account when generating the set of candidate components.
16. The method according to item 12, 13, 14, or 15, wherein machine learning algorithms are applied when generating the set of candidate components.
17. The method according to any one of items 12-16, wherein the first and second digital models relate to first and second physical components, respectively, such as where the first and second model is a digital 3D representation of a first and second component, respectively.
18. A method for use in generating a data storage storing information expressing relationships between components assembled to form products, the method comprising:
   - obtaining a digital assembly comprising a first digital model and a second digital model arranged according to a first relative arrangement;
   - determining the distance between the first and second digital models in the first relative arrangement; and
   - storing information in a data storage, where the stored information comprises data expressing the distance between the first and second digital models in the obtained digital assembly.
19. The method according to item 18, wherein the first digital model relates to a first component, and a relationship between the first component and other components is determined by a statistical analysis of information stored for a plurality of digital assemblies, where the relationship express how frequent the first component and other components are connected in digital assemblies.
20. The method according to item 19, where a strong relationship is assigned to a first and second component if the distance between corresponding first and second digital models frequently is within a threshold distance.
21. A data storage encoded on a non-transitory computer readable medium, the data storage storing information comprising:
   - data expressing distances between at least a first digital models and other digital models in a plurality of previously designed digital assemblies.
22. The data storage according to item 21, wherein the stored information comprises the relative arrangement of the first digital models and the other digital models in the plurality of previously designed digital assemblies.
23. A method for generating a set of candidate components for a next component when creating an assembly of digital models, wherein the method comprises:
   - obtaining a first digital model of a first component;
   - obtaining a data storage storing information comprising data expressing distances between at least a first digital models and other digital models in a plurality of previously designed digital assemblies;
   - analyzing the information stored in the data storage to determine relationships between the first component and a plurality of other components;
   - generating a set of candidate components for a next component which is intended to be connected with the first component by selecting a number of candidate components based on the determined relationships; and
   - displaying digital representations of the candidate components in the set of candidate components in a user interface.
24. The method according to item 23, wherein the set of candidate components for a next component is generated based on which component have the strongest relationship with the first component.

Although some embodiments have been described and shown in detail, the disclosure is not restricted to them, but may also be embodied in other ways within the scope of the subject matter defined in the following claims. In particular, it is to be understood that other embodiments may be utilized and structural and functional modifications may be made without departing from the scope of the present disclosure.

In device claims enumerating several means, several of these means can be embodied by one and the same item of hardware. The mere fact that certain measures are recited in mutually different dependent claims or described in different embodiments does not indicate that a combination of these measures cannot be used to advantage.

A claim may refer to any of the preceding claims, and "any" is understood to mean "any one or more" of the preceding claims.

It should be emphasized that the term "comprises/comprising" when used in this specification is taken to specify the presence of stated features, integers, steps or components but does not preclude the presence or addition of one or more other features, integers, steps, components or groups thereof.

## Claims

1. A method for use in generating a data storage storing information expressing which components have been arranged in direct contact in assembled products, the method comprising:
- obtaining a digital assembly comprising a first digital 3D model and a second digital 3D model arranged according to a first relative arrangement;
- determining if the first and second digital 3D models are in direct contact in the first relative arrangement; and
- in accordance with a determination that the first and second digital 3D models are in direct contact, storing information in a data storage where the stored information is expressing that the first and second digital 3D models are in direct contact in the obtained digital assembly.

2. The method according to claim 1, wherein the stored information comprises data expressing the context of the digital assembly.

3. The method according to claim 1 or 2, wherein the stored information comprises data expressing the first relative arrangement.

4. The method according to claim 1, 2 or 3, wherein determining if the first and second digital 3D models are in direct contact comprises determining a shortest distance between the first and second digital 3D models in the first arrangement, and comparing the shortest distance with a threshold distance.

5. The method according to claim 1, 2, 3 or 4, where the method comprises detecting the contacting surfaces of the first and second digital 3D models, and where the stored information comprises data identifying the contacting surfaces.

6. The method according to claim 5 as dependent on claim 4, wherein the contacting surfaces are identified as the surfaces of the first and second digital 3D models having a distance within the threshold distance.

7. The method according to claims 4, 5 or 6, wherein the stored information comprises the determined shortest distance between the first and second digital 3D models.

8. The method according to any one of claims 1-7, wherein the stored information comprises data identifying the first and second digital 3D models.

9. The method according to any one of claims 1-8, wherein the method comprises:
- obtaining a plurality of digital assemblies comprising digital 3D models for a plurality of components; and
- determining which of the plurality of digital 3D models in each of the digital assemblies are in direct contact;
where the stored information is expressing which digital 3D models are in direct contact in the obtained digital assemblies.

10. A method for generating a set of candidate components for a next component when creating an assembly of digital 3D models, wherein the method comprises:
- obtaining a first digital 3D model of a first component;
- obtaining information expressing which components the first component has been arranged in direct contact with in a plurality of designed digital assemblies; and
- generating, based on the information, a set of candidate components for a next component which is intended to be arranged in direct contact with the first component in the created assembly
wherein the information is obtained from a data storage, and where the data storage is generated using the method according to any one or more of claims 1-9.

11. The method according to claim 10, wherein the method comprises performing a statistical analysis on the obtained information to determine which digital models of components the first digital model most frequently has been in direct contact with in the plurality of designed digital assemblies.

12. The method according to claim 10 or 11, wherein the statistical analysis comprises applying machine learning algorithms on the stored information.

13. A system for use in generating a data storage storing information expressing which components have been arranged in direct contact in assembled products, the system comprising:
- a hardware processor;
- a non-transitory computer readable medium encoded with a computer program product configured to provide a digital tool for generating the data storage, where the computer program comprises instructions for:
- obtaining a digital assembly comprising a first digital 3D model and a second digital 3D model arranged according to a first relative arrangement;
- determining if the first and second digital 3D models are in direct contact in the first relative arrangement; and
- in accordance with a determination that the first and second digital 3D models are in direct contact, storing information in a data storage where the stored information is expressing that the first and second digital 3D models are in direct contact in the obtained digital assembly.
